# EUROPÄISCHE PATENTSCHRIFT

(11) **EP 0 957 804 B1**
(45) Veröffentlichungstag und Bekanntmachung des Hinweises auf die Patenterteilung: **21.05.2003**
(21) Anmeldenummer: 96944558.4
(22) Anmeldetag: 11.09.1996
(51) Int. Cl.: A61C 1/00, B23K 26/04, A61B 17/00

(54) **VORRICHTUNG ZUR MATERIALABTRAGUNG VON EINEM WERKSTÜCK MITTELS LASERBESTRAHLUNG**
DEVICE FOR REMOVING MATERIAL FROM A WORKPIECE BY LASER RADIATION
DISPOSITIF D'ENLEVEMENT DE MATIERE D'UNE PIECE PAR RAYONNEMENT LASER

(30) Priorität: 11.09.1995 DE 19534590
(43) Veröffentlichungstag der Anmeldung: 24.11.1999
(73) Patentinhaber: Clinicon Corporation, Carlsbad, CA 92008 (US)
(72) Erfinder: MÜLLER, Gerhard, D-14129 Berlin (DE); ERTL, Thomas, D-15831 Mahlow (DE); BENTHIN, Hartmut, D-10783 Berlin (DE)
(74) Vertreter: Eisenführ, Speiser & Partner
(86) Internationale Anmeldenummer: DE9601788
(87) Internationale Veröffentlichungsnummer: WO97012559

(56) Entgegenhaltungen:
- EP-A- 0 073 617
- EP-A- 0 619 100
- WO-A-89/11260
- DE-A- 3 245 846
- DE-U- 9 320 739
- US-A- 4 761 054

## Beschreibung

Die Erfindung betrifft eine Vorrichtung zum Abtragen von Material von einem Werkstück, insbesondere zum Abtragen von Zahnhartsubstanz wie Zahnschmelz oder Dentin von einem Zahn oder zum Materialabtrag von keramischen Werkstoffen, mittels eines Lasers, gemäß dem Oberbegriff des Anspruchs 1.

Vorrichtungen dieser Art sind beispielsweise aus DE 41 28 617, GB 81 25 944, US 5 020 995, DE 4 038 809, DE 34 15 293 sowie DE-GM 92 01 056.3 bekannt und verwenden zum Abtragen von Zahnhartsubstanz gepulste Laserstrahlung mit Pulslängen entweder kleiner als 100 ns oder größer als 100 µs. Die Fokusgröße des Laserstrahls, also die Ausdehnung des Laserstrahls auf der bestrahlten Werkstückoberfläche, ist hierbei relativ groß und liegt zwischen 0,2 und 1,5 mm. Aus den vorstehend genannten Schriften ist weiterhin bekannt, der Verschmutzung der Endoptik durch Freiblasen mit Wasser-Luft-Spray entgegenzuwirken. Aus DE 39 11 871 ist darüber hinaus bekannt, Wasser-Luft-Spray auch zur Kühlung des Laserprozesses zu verwenden, was zu einer deutlichen qualitativen Verbesserung des Ablationsergebnisses führt.

DE 42 11 233 beschreibt ein derartiges Gerät zum Abtragen von Zahnhartsubstanz mit einem in einen Behandlungsstuhl integrierten Er:YAG-Laser und einem Handhabungsteil zur Positionierung des Laserstrahls, wobei die Verbindung zwischen dem Laser und dem Handhabungsteil durch einen Spiegelgelenkarm erfolgt.

Es ist bei derartigen Geräten zum Materialabtrag weiterhin bekannt, den Laserstrahl zeilenweise über das Ablationsareal zu führen, um eine gleichmäßige Materialabtragung zu erreichen (engl. Scanning).

Nachteilig bei den vorbekannten Geräten zur Zahnhartsubstanzbearbeitung sind rekristallisierte Auflagerungen an der durch die Bestrahlung entstehenden Kavitätenoberfläche. Darüber hinaus besteht beim Materialabtrag von Zähnen das Problem, daß die Abtragsrate mit zunehmender Tiefe des Materialabtrags beim Übergang vom Zahnschmelz zum Dentin sprunghaft und für den Behandelnden überraschend ansteigt, was bei den vorbekannten Geräten zu akzidenteller Pulpaöffnung führen kann. Ein weiterer Nachteil der vorbekannten Geräte ist darin zu sehen, daß aufgrund der relativ hohen Pulsenergien Stoßwellen entstehen, die den Zahnnerv schädigen können.

Aus der DE 32 45 846 A1 ist eine Vorrichtung zum Abtragen von Material von einem Werkstück mittels eines Laserstrahls bekannt. Bei dieser Vorrichtung ist eine Einrichtung zur Kontrolle der Tiefe des Materialabtrages vorgesehen in Form einer Steuereinrichtung, die dazu dient, den Laserstrahl nur dann einzuschalten, wenn der Abstand zwischen einem Handstück der Vorrichtung und dem Werkstück in einem bestimmten vorgegebenen Bereich liegt. Die Steuereinrichtung umfasst mehrere Paare von Lichtdetektoren, die das vom Werkstück reflektierte Licht eines Pilotstrahls erfassen und jeweils mit einer Abstandsmesseinheit verbunden sind, welche wiederum mit einer Abstandsbestimmungseinheit verbunden sind. Die jeweilige Abstandsmesseinheit ermittelt aus den Ausgangssignalen der zugehörigen Lichtdetektoren, ob sich aus diesen ein Abstand zwischen Handstück und Werkstück ergibt, der größer oder kleiner als ein vorgegebener Abstandswert ist. Ein Addierer summiert die Signale der verschiedenen Abstandsmesseinheiten. Die Abstandsbestimmungseinheit vergleicht die Summe mit einem bestimmten Schwellwert und gibt je nach dem, ob der aufaddierte Wert ober- oder unterhalb des Schwellwertes liegt, ein Einschalt- bzw. Ausschaltsignal für den Laser ab.

Diese Vorrichtung ermöglicht es zwar, dass die Bearbeitung eines Werkstücks stets nur dann erfolgt, wenn ein optimaler Abstand zwischen Handstück und Werkstück besteht. Sie weist jedoch den Nachteil auf, dass der damit erzielte Bearbeitungserfolg stark vom Geschick des Bearbeiters abhängt. Dieser muss beispielsweise durch Sichtkontrolle ständig erfassen, wie weit er bei der Bearbeitung des Werkstücks bereits fortgeschritten ist. Schon kurze Unachtsamkeiten oder eine Fehleinschätzung des Bearbeitungsfortschrittes können dabei zu einem unerwünscht starken Materialabtrag führen.

Der vorliegenden Erfindung liegt somit die Aufgabe zu Grunde, eine Vorrichtung zur Verfügung zu stellen, bei welcher in einfacher Weise der Materialabtrag lateral und axial kontrolliert werden kann.

Die Aufgabe wird von einer Vorrichtung mit den Merkmalen des Anspruchs 1 gelöst.

Bei der erfindungsgemäßen Vorrichtung zum Abtragen von Material von einem Werkstück weist die Einrichtung zur Kontrolle des Materialabtrages einen Subtrahierer zum Errechnen einer Abtragstiefe anhand mindestens eines Differenzwertes aus einem vor einem Materialabtrag empfangenen Entfemungsmesswert und einem nach einem erfolgten Materialabtrag empfangenen Entfernungsmesswert auf. Weiterhin ist eine Recheneinheit zur Berechnung der gesamten Materialabtragstiefe aus mehreren Einzelabtragstiefen sowie eine Vergleicheeinheit zum vergleichen der Gesamtabtragstiefe mit einem vorbestimmten Sollwert vorgesehen.

Die Erfindung schließt die technische Lehre ein, während des Materialabtrages mittels eines Laser-Entfernungsmessers laufend die Entfernung zu der Werkstückoberfläche im Ablationsgebiet zu messen, um die Tiefe des Materialabtrages zu ermitteln und nötigenfalls die Bestrahlung zu stoppen oder die Intensität der Bestrahlung zu verringern.

Die Erfindung geht von der überraschenden Erkenntnis aus, dass es ber einer Verringerung des Spotdurchmessers - also des Laserstrahldurchmessers im Ablationsgebiet - und gleichzeitiger Erhöhung der Pulswiederholrate und Verringerung der Pulsenergie unter Beibehaltung der Energiedichte zu keiner Verringerung der Abtragsmenge im Vergleich zur konventionellen Ablation mit hohen Pulsenergien kommt. Diese Erkenntnis ist überraschend, da bei einer Verringerung des Spotdurchmessers wegen des ungünstigeren Verhältnisses von Ablationsfläche (∼r²) und Umfang (∼r) eine Zunahme von störenden Randeffekten zu erwarten wäre. Die Verringerung des Spotdurchmessers bietet nun die Möglichkeit, im Rahmen der vorliegenden Erfindung den erfolgten Materialabtrag mit hoher örtlicher Auflösung zu erfassen und - in weiterbildenden Varianten der Erfindung - auch die Materialabtragung mit hoher örtlicher Auflösung zu steuern.

Es ist also auch möglich, mit Pulsenergien unter 50 mJ bei Spotdurchmessern unter 350 um unter Beachtung des Absorptionsverhaltens von Zahnhartsubstanz mit Wellenlängen im Bereich von 1,9...2,1 um sowie 2,5...3,3 um oder 9,2...11 µm, vornehmlich jedoch 2,78 µm und 2,94 um bzw. 9,6 µm und 10,6 µm und dem Einsatz von Spraykühlung mit einem Fluid-Luft-Gemisch effizient Keramik, biologische Hartsubstanzen und Kunststoffe zu bearbeiten. Das Fluid sollte dabei eine hohe Absorption der Laserenergie aufweisen. Die niedrigen Pulsenergien können zum Erreichen einer ausreichenden Abtragleistung durch eine Erhöhung der Pulsrate im Bereich 10 Hz...10 kHz ausgeglichen werden. Folgende Kombinationen haben sich hierbei als vorteilhaft erwiesen:

| Spotdurchmesser [µm] | Energiedichte [J/cm²] | Pulsenergie [mJ] | Pulsrate [Hz] |
|---|---|---|---|
| 150 | 30 | 10 | 500 |
| 240 | 30 | 20 | 250 |
| 350 | 30 | 40 | 125 |
| 540 | 30 | 80 | 62,5 |

Entgegen allen derzeit üblichen Erkenntnissen zeigte sich, daß trotz der strukturellen Ähnlichkeit von Zahnschmelz und Dentin ein akzeptabler Kompromiß zwischen Ablationsqualität und Ablationsrate nur mit unterunterschiedlichen Pulslängen realisiert werden kann. Die Pulslängen für die Dentinbearbeitung liegen vorzugsweise im Bereich 100...300 µs, wohingegen die optimalen Pulslängen für die Bearbeitung von Zahnschmelz im Bereich 10...80 µs liegen.

Zur Erfassung des erfolgten Materialabtrags ist gemäß der Erfindung ein Entfernungsmesser vorgesehen, der in dem Handhabungsteil zur Führung des Laserstrahls angeordnet ist und mittels eines Meßstrahls die Entfernung zu dem bearbeiteten Werkstück - in der Regel einem Zahn - mißt. Der Begriff Handhabungsteil betrifft in erster Linie Dental-Handstücke, die dem behandelnden Zahnarzt die Führung des Laserstrahls im Mundraum des Patienten ermöglicht, schließt jedoch auch maschinell - beispielsweise durch Roboter - positionierbare Einrichtungen ein, was insbesondere bei der Materialbearbeitung von Werkstücken im nicht-medizinischen Bereich relevant ist. Der Laser kann hierbei wahlweise direkt in dem Handhabungsteil oder in einem separaten Gerät angeordnet sein, wobei die Verbindung von Handhabungsteil und Laser im letzteren Fall - wie in den eingangs genannten vorbekannten Druckschriften beschrieben - durch Lichtwellenleiter oder mit einem Spiegelgelenkarm erfolgen kann.

Der zur Entfernungsmessung dienende Meßstrahl kann von einem separaten Laser erzeugt und koaxial oder paraxial in den Strahlengang eingekoppelt werden. Darüber hinaus ist es jedoch auch möglich, den zum Materialabtrag dienenden Laser mit verminderter Pulsenergie auch zur Entfernungsmessung zu verwenden.

In einer Variante der Erfindung erfolgt die Entfernungsmessung durch Auswertung der Brennweitenanpassung von Werkstückoberfläche und Meßlaser. Die Erfindung geht hierbei von der Erkenntnis aus, daß die Auffächerung des reflektierten Meßstrahls von dem Abstand zwischen Brennebene und Werkstückoberfläche abhängt. Liegt die Werkstückoberfläche beispielsweise exakt in der Brennebene, so ist die Auffächerung des reflektierten Meßstrahls minimal. Mit zunehmendem Abstand zwischen Brennebene und Werkstückoberfläche nimmt dann auch die Auffächerung des reflektierten Meßstrahls zu. Zur Fokussierung des Meßstrahls ist deshalb in dieser Variante der Erfindung eine Sammellinse vorgesehen, die im Handhabungsteil im Strahlengang des Meßstrahls bearbeitungsseitig angeordnet ist. Zur Auskopplung des an dem Werkstück reflektierten Meßstrahls ist weiterhin ein Strahlteiler vorgesehen, der vorzugsweise zwischen dem Meßlaser und der Sammellinse angeordnet ist und beispielsweise aus einem halbdurchlässigen Spiegel bestehen kann. Der von dem Strahlteiler ausgekoppelte reflektierte Meßstrahl wird dann von einer weiteren Sammellinse fokussiert und ausgewertet.

Die Auswertung des reflektierten Meßstrahls kann beispielsweise dadurch erfolgen, daß im Strahlengang des reflektierten Meßstrahls ein Spiegel angebracht ist, der bei einer Übereinstimmung von Brennebene des Meßstrahls und Werkstückoberfläche den reflektierten Meßstrahls vollständig auf einen ersten Lichtdetektor reflektiert. Mit zunehmendem Abstand zwischen Brennebene des Meßlasers und Werkstückoberfläche nimmt dann die Auffächerung des reflektierten Meßstrahls zu, so daß der Spiegel zunehmend seitlich überstrahlt wird und somit ein immer geringerer Anteil des reflektierten Meßstrahls den ersten Lichtdetektor erreicht. Besonders vorteilhaft ist diese Variante in Verbindung mit einem zweiten Lichtdetektor, der hinter dem Spiegel angeordnet ist und das bei einer weiten Auffächerung des reflektierten Meßstrahls seitlich an dem Spiegel vorbeigehende Licht erfaßt, so daß durch eine Quotientenbildung der von den beiden Lichtdetektoren gemessenen Intensitäten eine große Genauigkeit erreicht werden kann.

In einer anderen Variante der Erfindung ist dagegen vorgesehen, den zur Entfernungsmessung dienenden Meßstrahl paraxial zur optischen Achse einzukoppeln, so daß der Meßstrahl bei einer Übereinstimmung von Brennebene und Werkstückoberfläche im Brennpunkt reflektiert wird und mit zunehmendem Abstand zwischen Brennebene und Werkstückoberfläche seitlich auswandert. Zur Auswertung des reflektierten Meßstrahls sind in dieser Variante der Erfindung wieder zwei Lichtdetektoren vorgesehen, die in dem Handhabungsteil im Strahlengang des reflektierten Meßstrahls nebeneinander angeordnet sind, wobei der reflektierte Meßstrahl bei einer exakten Übereinstimmung von Brennebene und Werkstückoberfläche nahezu ausschließlich auf den ersten Lichtdetektor trifft und mit zunehmenden Abstand zwischen Brennebene und Werkstückoberfläche aufgrund des damit einhergehenden seitlichen Auswanderns des Meßstrahls in zunehmendem Maße auch auf den zweiten Lichtdetektor fällt, so daß die Entfernung zur Werkstückoberfläche aus dem Verhältnis der von den beiden Lichtdetektoren gemessenen Intensitäten berechnet werden kann. Die Lichtdetektoren können hierbei - wie auch bei dem zuvor beschriebenen Ausführungsbeispiel - TGS-Detektoren sein. Bei Wellenlängen im Bereich um 10 µm lassen sich auch peltiergekühlte HgCdTe-Detektoren und bei Wellenlängen um 3 µm peltiergekühlte InAs-Detektoren verwenden.

In der bevorzugten Ausführungform der Erfindung, die mit den beiden vorstehend beschriebenen Varianten kombinierbar ist, ist die bearbeitungsseitig vorgesehene Sammellinse zusätzlich in axialer Richtung verschiebbar und wird durch eine Stelleinrichtung in axialer Richtung oszillierend bewegt. Durch diese Bewegung der Sammellinse wird die Brennebene des Meßstrahls laufend in axialer Richtung verschoben. Die Berechnung der Entfernung zur Werkstückoberfläche erfolgt hierbei durch eine Recheneinheit, die eingangsseitig zur Aufnahme eines die jeweilige Position der Sammellinse wiedergebenden Signals mit der Stelleinrichtung sowie zur Erfassung der jeweiligen Lichtintensitäten mit den beiden Lichtdetektoren verbunden ist. Die Recheneinheit wertet hierzu beispielsweise die Phasenverschiebung zwischen der Linsenposition und dem Quotienten der von den beiden Lichtdetektoren gemessenen Intensitäten aus. Falls die oszillierend bewegte Sammellinse bei der vorstehend beschriebenen Ausführungsform auch von dem Bearbeitungsstrahl passiert wird, so sollten die einzelnen Pulse des Bearbeitungsstrahls jeweils in dem Moment erfolgen, wenn der Spotdurchmesser aufgrund der Lage der oszillierenden Sammellinse minimal ist, was sich beispielsweise durch eine Triggerung des Lasers durch das Ausgangssignal der beiden Lichtdetektoren erreichen läßt.

In einer weiterbildenden Variante der Erfindung ist vorgesehen, einen Betrieb des zum Materialabtrag dienenden Lasers nur in einem bestimmten Entfernungsbereich zu dem zu behandelnden Werkstück - in der Regel einem Zahn - zuzulassen, um einerseits eine Gefährdung von umstehenden Personen durch den Laserstrahl auszuschließen und andererseits eine zu starke Bestrahlung des Werkstücks aus zu geringen Entfernungen zu verhindern. Die Recheneinheit ist hierzu ausgangsseitig mit einem Schwellwertglied verbunden, welches den von der Recheneinheit ermittelten Entfernungswert mit einem oberen und einem unteren Schwellwert vergleicht und beim Unter- bzw. Überschreiten dieses Wertes den Laser abschaltet.

Die vorstehend beschriebene Abschaltung des zum Materialabtrag dienenden Lasers beim Überschreiten der vorgegebenen Minimalentfernung zur Werkstückoberfläche ermöglicht jedoch nicht die Erzeugung glatter Werkstückoberflächen. In einer weiterbildenden Variante der Erfindung ist deshalb vorgesehen, daß Ausgangssignal der Recheneinheit einem Regler zuzuführen, der die Laserleistung durch Einstellung von Impulsrate, Impulsdauer oder Impulsenergie automatisch an die Entfernung zur Werkstückoberfläche anpaßt. Kommt die gemessene Tiefe der vorgegebenen Abtragstiefe nahe, so wird die Laserleistung entsprechend verringert, bis der Laser beim Erreichen der vorgegebenen Abtragstiefe schließlich vollständig ausgeschaltet wird. Durch diese kontinuierliche Anpassung der Laserleistung im Verlauf des Abtragsprozesses lassen sich vorteilhaft sehr gleichmäßige Werkstückoberflächen erzeugen, was insbesondere im Dentalbereich beim Abtragen von Zahnhartsubstanz wichtig ist, um später bakteriellen Ablagerungen keinen Ansatzpunkt zu liefern.

Gemäß einer weiteren Variante der Erfindung ist vorgesehen, den zum Materialabtrag dienenden Laserstrahl während der Bearbeitung über die Werkstückoberfläche zu führen, um auch bei einem geringen Spotdurchmesser größere Bereiche eines Werkstücks bearbeiten zu können. Zur Führung des Laserstrahls ist in dieser Variante der Erfindung eine Strahlablenkvorrichtung vorgesehen, die im Strahlengang des zum Materialabtrag dienenden Laserstrahls angeordnet ist und beispielsweise aus einem dreh- oder schwenkbaren Spiegel bestehen kann, der den Laserstrahl entsprechend der jeweiligen Spiegelstellung ablenkt. Die Verstellung des Spiegels kann beispielsweise mittels zweier Schrittmotoren erfolgen, die den Spiegel um zwei zueinander senkrechte Achsen drehen und somit eine beliebige Verlagerung des Ablationsgebiets - also des Spots - auf der Werkstückoberfläche ermöglichen.

Die Verlagerung des Ablationsgebiets kann beispielsweise zeilen- bzw. spaltenweise erfolgen, was auch als Raster-Scan bezeichnet wird. Es ist jedoch auch möglich, den Laserstrahl derart abzulenken, daß aufeinanderfolgende Ablationspunkte innerhalb des zu bearbeitenden Areals möglichst weit entfernt liegen, um eine zwischenzeitliche Abkühlung des zuvor bestrahlten Ablationsgebiets zu ermöglichen und so eine homogene Wärmeverteilung zu erreichen. Darüber hinaus ist es jedoch auch möglich, Kreise oder Ellipsen, beginnend bei einem Spotdurchmesser bis 3 mm, sowie Linien bis 3 mm und Rechtecke mit Kantenlängen bis 3 mm zu scannen. Bei einem Arbeitsabstand zwischen Handhabungsteil und Werkstückoberfläche von 15 mm erfordert dies eine Spiegelablenkung von ca. 4°, was einer Strahlablenkung von 8° entspricht. Beim Einsatz im Dentalbereich wird die Führung des Bearbeitungsstrahls an die gewünschte Behandlung angepaßt. So wird der Bearbeitungsstrahl bei einer Fissurbehandlung vorzugsweise linienförmig über die Zahnoberfläche geführt. Bei einer Kariesbehandlung bietet sich dagegen eine kreisförmige oder elliptische Führung des Bearbeitungsstrahls an, wohingegen sich die Führung des Bearbeitungsstrahls innerhalb eines rechteckigen Gebietes besonders zur Präparation von Retentionsrillen eignet.

In der bevorzugten Ausführungsform wird der Laserstrahl jedoch durch einen mit Schrittmotoren angesteuerten Spiegel über 10 Zeilen mit je 10 Punkten geführt, wobei bei 100 Hz Pulsrate zwischen zwei Punkten 10 ms Zeit bleibt. Läßt man bei kontinuierlicher Spiegelbewegung eine Strahlverwischung von 1/10 Spotdurchmesser zu, so verbleiben für Laserpuls und Tiefenmessung 1 ms bei 100 Hz bzw. 100 µs bei 1 kHz Pulsrate.

In einem weiteren Ausführungsbeispiel wird dagegen ein pneumatisch oder elektrisch angetriebener Spiegelfacettenscanner zur Strahlablenkung eingesetzt. Zur Realisierung eines Zeilenscans sind die einzelnen Spiegelfacetten gegeneinander verkippt. Da im Kopf des Handhabungsteils meist nur Abmessungen von ca. 15x15 mm möglich sind und ein Mindeststrahldurchmesser von 2 mm am Spiegel nicht unterschritten werden sollte, läßt sich nur eine begrenzte Anzahl Facetten realisieren. Möglich ist beispielsweise ein Octagon mit in Richtung senkrecht zur Scannerdrehachse aufgerichteten Facetten. Bei einer 2/3 Belegung der Facetten durch den Strahldurchmesser verbleiben beim Octagon 15° nutzbarer Scanwinkel. Durch die Facettenaufrichtung reduziert sich dieser auf die notwendigen 4-5°.

Beim Betrieb dieser Art von Scannern sind zwei Betriebsarten möglich:
1. Man gibt alle Laserpulse einer Scanzeile auf die gleiche Facette. Bei 100 Hz Pulswiederholrate dreht der Scanner mit 96 UPM. Von der gesamten Zeit können jedoch 2/3 nicht genutzt werden, da bei 2/3 Facettenbelegung sich dann eine Facettenkante im Strahldurchmesser befindet, was die effektive Pulsrate auf 1/3 reduziert.
2. Man gibt auf eine Facette nur einen Laserpuls. Bei 8 Facetten und 100 Hz Pulswiederholrate ergibt sich dann eine Drehzahl des Scanners von ca. 750 UPM. Der nächste Puls erfolgt um eine Zeile und einen Spotdurchmesser versetzt. Läßt man einen Strahlversatz von ¹/₁₀ des Strahldurchmessers zu, so stehen ca. 20 µs für Tiefenmessung und Laserpuls zur Verfügung.

Neben den beiden vorstehend beschriebenen Ausführungsformen von Strahlablenkvorrichtungen lassen sich auch akustooptische oder elektrooptische Deflektoren verwenden, falls Scanzeilen von ca. 1 mm ausreichen. Als Materialien eignen sich für den IR-Bereich z.B. Ge oder TeO₂. Die HF-Ansteuerleistung liegt dann bei ca. 10 W. Vorteilhaft ist es hierbei, die mit zunehmendem Ablenkwinkel abnehmende Strahlleistung durch eine entsprechende Erhöhung der Pulsenergie mit zunehmendem Ablenkwinkel auszugleichen.

In einer weiteren Ausführungsform der Erfindung ist vorgesehen, das vom Bearbeitungsstrahl erreichbare Gebiet der Werkstückoberfläche zu erweitern, indem die Strahlablenkung in X- und Y-Richtung getrennt wird. Der Bearbeitungsstrahl wird hierzu parallel zur Objektoberfläche - in der Regel der Okklusalfläche - geführt und oberhalb des Ablationsgebiets um 90° abgelenkt. Die 90°-Umlenkoptik übernimmt dabei einen Teil der Fokussierung des Laserstrahls. In der bevorzugten Ausführungsform wird hierzu eine Zylinderlinse und ein zylindrischer Konkavspiegel verwendet. Die Umlenkoptik wird parallel zum Strahl auf zwei Führungsschienen bewegt, wobei zwei Trapezgewindestangen den Vortrieb übernehmen. Die dazu orthogonale Ablenkung ist - wie bereits zuvor eingehend beschrieben - über mechanische-, akustooptische oder elektrooptische Deflektoren ausgeführt. In dieser Ausführungsform ist es empfehlenswert, den Umlenkspiegel und die Zylinderlinse durch intermittierendes Besprühen mit einem Aerosol von Ablationsprodukten zu reinigen.

In einer vorteilhaften Variante der Erfindung ist vorgesehen, eine definierte Lagebeziehung zwischen Handhabungsteil und dem zu bearbeitenden Werkstück herzustellen, um die Materialabtragung in einer vorgegebenen Geometrie zu ermöglichen. Die dafür erforderliche Lagefixierung des Handhabungsteils erfolgt durch einen Halter, der das Handhabungsteil aufnimmt und an dem zu bearbeitenden Werkstück befestigt werden kann. Bei der Verwendung des Handhabungsteils im Dentalbereich zum Abtragen von Zahnhartsubstanz eignet sich als Halter eine mit Abformmaterial füllbare Schiene, die zur Lagefixierung des Handhabungsteils auf eine Zahnreihe aufgesteckt wird, wodurch das Handhabungsteil nach dem Aushärten des Abformmaterials relativ zu der jeweiligen Zahnreihe fixiert ist.

Die Lagefixierung des Handhabungsteils relativ zu dem zu bearbeitenden Werkstück bietet den Vorteil, daß die Geschicklichkeit des Bedienungspersonals nur geringen Einfluß auf die Bearbeitungsqualität hat, da beispielsweise ein Verwackeln des Handhabungsteils ausgeschlossen ist. Darüber hinaus ist die Lagefixierung des Handhabungsteils Voraussetzung für eine exakte Erzeugung von vorgegebenen Geometrien, was beispielsweise bei der Herstellung von Kronenstümpfen und Kavitäten wichtig ist.

In einer weiterbildenden Variante der Erfindung ist deshalb vorgesehen, die Materialabtragung nach der Lagefixierung des Handhabungsteils rechnergesteuert durchzuführen. Das Handhabungsteil ist hierzu mit einem Bedienrechner verbunden, der den Bearbeitungslaser ansteuert und Impulsrate, Impulsdauer sowie Impulsenergie einstellt. Darüber hinaus steuert der Bedienrechner die Strahlablenkvorrichtung an und kann den Bearbeitungsstrahl somit in beliebiger Weise über die Werkstückoberfläche führen und somit nahezu beliebige Oberflächengeometrien erzeugen. Zur laufenden Überprüfung des Oberflächenverlaufs erhält der Bedienrechner das Ausgangssignal des Entfernungsmessers. Der Bedienrechner kann somit einen bestimmten Oberflächenverlauf vorgeben und das Werkstück solange mit dem Bearbeitungslaser bearbeiten, bis das Werkstück die gewünschte Oberflächenform aufweist. Die gewünschte Oberflächenform kann hierbei vom Benutzer aus einer auf dem Bedienrechner abgespeicherten Bibliothek von Standardformen ausgewählt werden. So ist es beispielsweise möglich, auf dem Bedienrechner Oberflächenverläufe zu speichern, die zur späteren Fixierung einer Krone auf einem Zahnstumpf erforderlich sind. Auch können auf diese Weise retentive Muster erzeugt werden, um beispielsweise die Haftung von Kunststoffüllungen auf Zahnschmelz zu verbessern. Darüber hinaus ist es natürlich auch möglich, den gewünschten Oberflächenverlauf auf dem Bedienrechner, beispielsweise mittels eines CAD-/CAM-Systems, individuell zu erstellen. Die Abtragungstiefe braucht hierbei vom Benutzer nicht für jeden Punkt der Werkstückoberfläche vorgegeben zu werden. Es reicht vielmehr aus, wenn der Benutzer die gewünschte Abtragstiefe an einigen Stützstellen vorgibt, woraufhin der Bedienrechner die Abtragstiefe zwischen den Stützstellen interpoliert und das Handhabungsteil entsprechend ansteuert. Bei der individuellen Vorgabe der gewünschten Oberflächengeometrie ist es auch möglich, zunächst die Oberfläche des Werkstücks abzutasten und auf dem Bildschirm des Bedienrechners, beispielsweise als Reliefdarstellung, auszugeben. Der Benutzer kann die vorhandene Oberflächenstruktur dann mit handgeführten Eingabegeräten editieren und anschließend die Bearbeitung entsprechend den vorgenommenen Änderungen automatisch durchführen lassen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: als bevorzugtes Ausführungsbeispiel der Erfindung ein Handhabungsteil zum Abtragen von Zahnhartsubstanz in Seitenansicht,
- Figur 2: den Entfernungsmesser der in Figur 1 dargestellten Vorrichtung in einer Prinzipdarstellung,
- Figur 3: eine andere Bauweise für einen Entfernungsmesser ebenfalls als Prinzipdarstellung,
- Figur 4: den Kopf des Handhabungsteil aus Figur 1 mit einem Spiegelfacettenscanner zur Positionierung des Laserstrahls,
- Figur 5: den in Figur 4 dargestellten Kopf des Handhabungsteils mit einem Aufsatz zur 90°-Strahlumlenkung,
- Figur 6: ein Diagramm zur Berechnung der Entfernung zwischen Handhabungsteil und zu behandelndem Zahn,
- Figur 7: die Abhängigkeit der Abtragsmenge von der Energiedichte für Dentin und Zahnschmelz mit der Pulsdauer als Parameter,
- Figur 8: eine Schaltung zur Berechnung der Abtragstiefe aus der gemessenen Entfernung sowie zur Tiefenkontrolle des Materialabtrags.

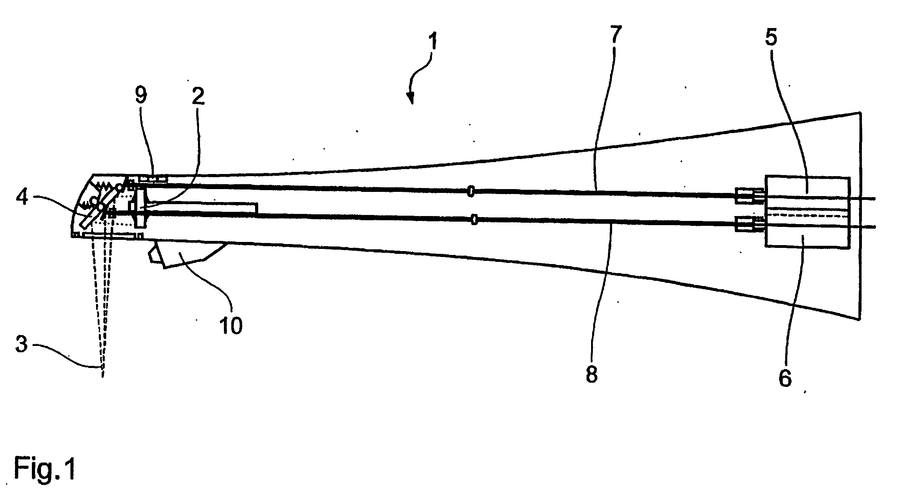

Das in Figur 1 dargestellte erfindungsgemäße Handhabungsteil 1 dient zum Abtragen von Zahnhartsubstanz - wie Dentin oder Zahnschmelz - durch einen Zahnarzt. Die Abtragung der Zahnhartsubstanz erfolgt hierbei durch einen Laserstrahl 3 - im folgenden als Bearbeitungsstrahl bezeichnet -, der über die in einem Moving-Coil-System 2 befindliche Linse und den Umlenkspiegel 4 zum Ablationsgebiet geführt wird. Zur Erzeugung des Bearbeitungsstrahls dient ein Er:YAG-Laser mit einer Emissionswellenlänge von 2940 nm.

Um den Auftreffpunkt des Bearbeitungsstrahls 3 auf dem zu behandelnden Zahn trotz der im nicht sichtbaren Bereich liegenden Wellenlänge des Bearbeitungsstrahls erkennbar zu machen, ist zusätzlich ein weiterer Laserstrahl 3 - im folgenden als Pilotstrahl bezeichnet - vorgesehen, der ebenfalls über den Umlenkspiegel 4 ins Ablationsgebiet geführt wird. Durch den Lichtpunkt des Pilotstrahls auf der Zahnoberfläche weiß der behandelnde Zahnarzt stets, an welcher Stelle Material abgetragen wird und kann so die Behandlung exakt steuern.

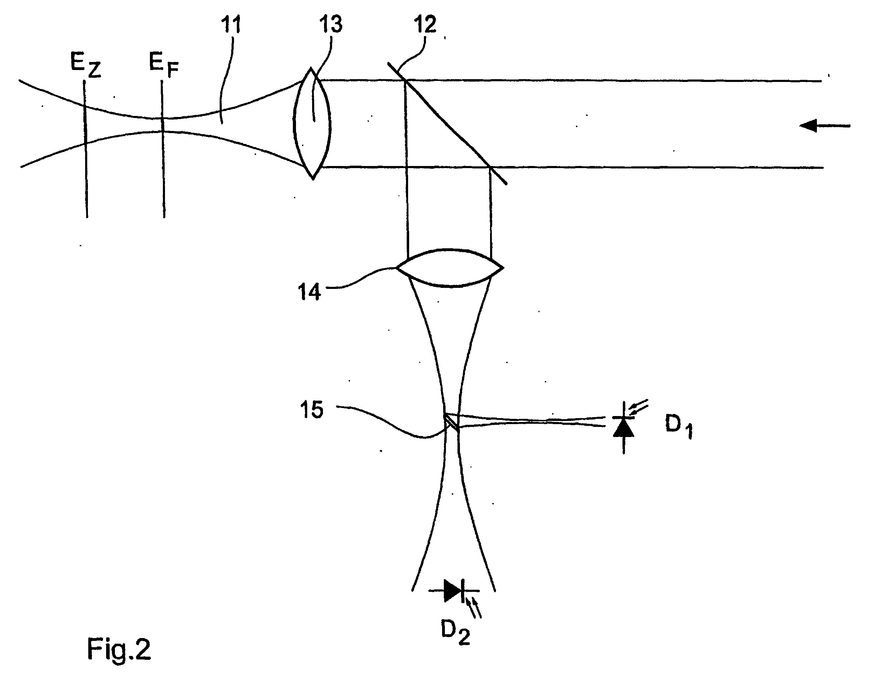

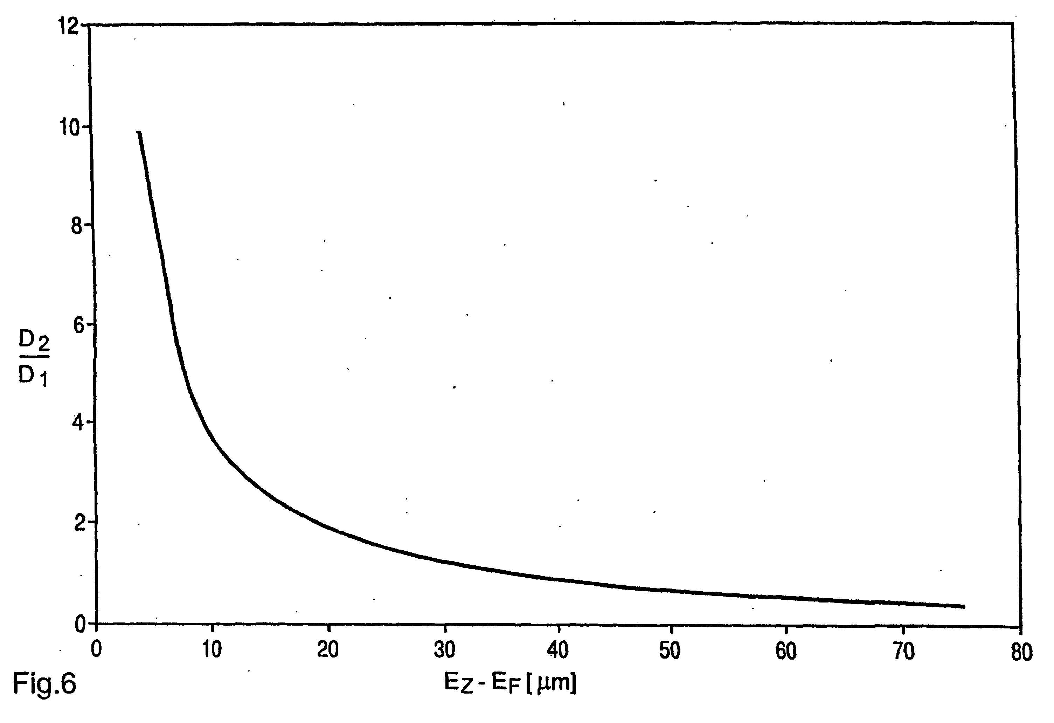

Darüber hinaus erzeugt das Handhabungsteil 1 einen weiteren Laserstrahl - im folgenden als Meßstrahl bezeichnet - der zur Messung der Entfernung zum Ablationsgebiet dient, um die Tiefe des Materialabtrags steuern zu können. Das hierbei verwendete Prinzip der Entfernungsmessung geht aus der in Figur 2 gezeigten Prinzipdarstellung hervor, die lediglich die zur Entfernungsmessung relevanten Bauteile zeigt. Der Meßstrahl 11 läuft durch den als Strahlteiler fungierenden teildurchlässigen Spiegel 12 und wird von der Sammellinse 13 auf die Brennebene E_{F} fokussiert. Der an dem bestrahlten Zahn reflektierte Meßstrahl 11 wird durch die Sammellinse 13, den Strahlteiler 12, die Samellinse 14 und den Spiegel 15 auf den Lichtdetektor D₁ geleitet. Die Sammellinse 13 führt hierbei laufend eine achsparallel oszillierende Bewegung aus, die zu einer entsprechenden Verschiebung der Brennebene E_{F} führt. Die Verstellung der Sammellinse 13 erfolgt hierbei elektromagnetisch durch eine Spule. Fallen nun Brennebene E_{F} und Zahnoberfläche E_{Z} zusammen, so ist der Spotdurchmesser und die Auffächerung des reflektierten Meßstrahls 11 minimal, so daß der reflektierte Meßstrahl 11 von dem Spiegel 15 vollständig auf den Lichtdetektor D₁ geleitet wird. Mit zunehmendem Abstand zwischen Brennebene E_{F} und Zahnoberfläche E_{Z} wächst dagegen der Spotdurchmesser und damit auch die Auffächerung des reflektierten Meßstrahls, so daß der Spiegel 15 zunehmend überstrahlt wird und ein wachsender Anteil des reflektierten Meßstrahls den Lichtdetektor D₂ erreicht. Aus der Quotientenbildung der Signale von D₁ und D₂ ergibt sich - wie aus dem in Figur 6 dargestellten Diagramm ersichtlich ist - eine ausgeprägte Abhängigkeit von dem Abstand zwischen Brennebene E_{F} und Zahnoberfläche E_{Z}, so daß sich aus der Phasenverschiebung zwischen dem Quotienten D₁/D₂ und dem Spulenstrom, welcher die Linse verschiebt, der Abstand zwischen Handhabungsteil 1 und Zahnoberfläche berechnen läßt.

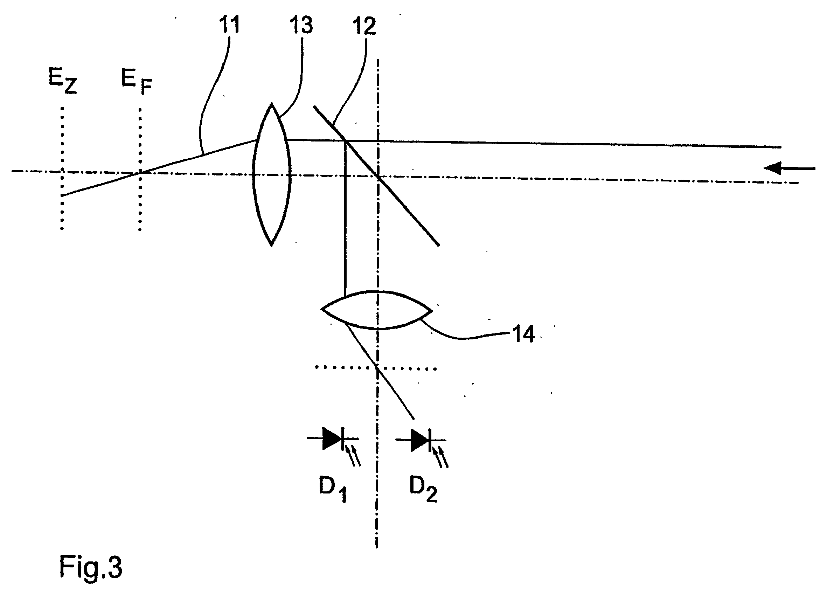

Eine alternative Ausführungsform eines Laser-Entfernungsmesser ist in Figur 3 dargestellt. Da der hier dargestellte Entfernungsmesser mit dem bereits in Figur 2 wiedergegebenen Entfernungsmesser weitgehende Übereinstimmungen aufweist, sind entsprechende Bauteile in beiden Figuren mit denselben Bezugszeichen versehen. Der Meßstrahl 11 verläuft hierbei zunächst parallel neben dem Bearbeitungsstrahl und wird über den teildurchlässigen Spiegel 12 und die Sammellinse 13 in das Ablationsgebit geleitet. Falls die Brennebene E_{F} der Sammellinse und die Zahnoberfläche E₂ zusammenfallen, so trifft der Meßstrahl 11 exakt den Brennpunkt der Sammellinse 13. Der reflektierte Meßstrahl 11 wird in diesem Fall über die Sammellinse 13, den Strahlteiler 12 und die Sammellinse 14 nahezu vollständig auf den Lichtdetektor D₁ geleitet. Mit zunehmendem Abstand zwischen Brennebene E_{F} und Zahnoberfläche E_{Z} wandert der Meßstrahl 11 dagegen zunehmend seitlich aus, so daß ein entsprechend geringerer Anteil des reflektierten Meßstrahls den Lichtdetektor D₁ erreicht, wodurch sich die Differenz der von D₁ und D₂ gemessenen Intensitäten ändert. Die Tiefeninformation ergibt sich in dieser Ausführungsform aus der Phasenverschiebung zwischen dem Spulenstrom, welcher die Sammellinse 13 axial verschiebt, und dem Differenzsignal der beiden Lichtdetektoren D₁ und D₂.

Darüber hinaus ermöglicht das in Figur 1 dargestellte Handhabungsteil 1 auch die Bestrahlung eines größeren Bereichs der Zahnoberfläche. Hierzu weist das Handhabungsteil 1 eine Strahlablenkvorrichtung auf, die im wesentlichen aus einem in zwei Richtungen Achsen schwenkbaren Spiegel 4 besteht, über den Bearbeitungs-, Meß- und Pilotstrahl zum Ablationsgebiet geführt werden. Die Einstellung des Spiegels erfolgt mittels zweier Schrittmotoren 5, 6, die über jeweils eine Welle 7, 8 mit zwei Taumelscheiben verbunden sind, die den Spiegel 4 in Abhängigkeit vom Drehwinkel der Welle 7, 8 in jeweils einer Richtung auslenken. Zur Rückstellung des Spiegels 4 ist dieser mit zwei Spiralfedern verbunden.

Darüber hinaus weist das Handhabungsteil 1 an der für den behandelnden Zahnarzt sichtbaren Oberseits eine LED-Leiste 9 auf, die die Lage des Bearbeitungspunkts relativ zur Brennebene anzeigt und so dem Zahnarzt eine Positionierung des Handhabungsteils 1 ermöglicht.

Weiterhin weist das Handhabungsteil 1 einen Dosierspender 10 auf, der über die Düse die Abgabe eines Sprays auf das Ablationsgebiet ermöglicht, um den Laserprozeß zu kühlen.

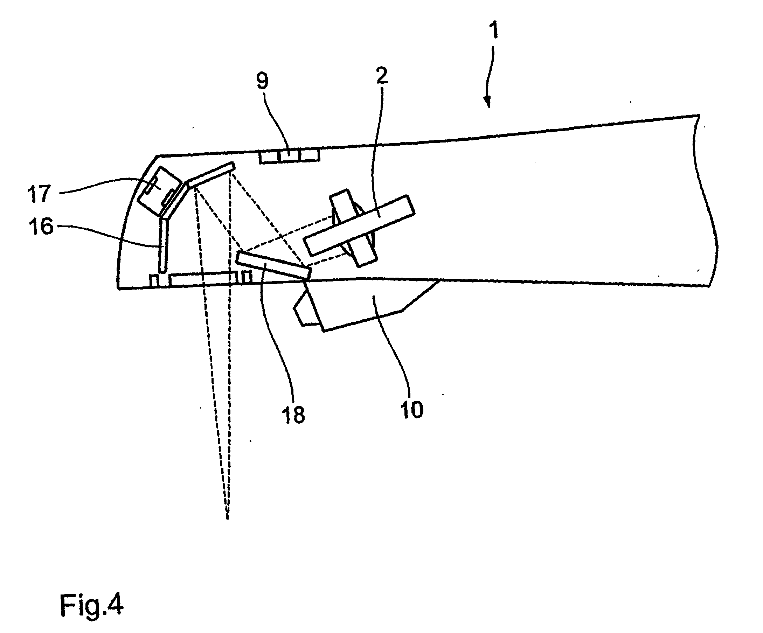

Eine alternative Ausführungsform der Strahlablenkvorrichtung ist in Figur 4 dargestellt, wobei lediglich der Kopf des erfindungsgemäßen Handhabungsteils 1 dargestellt ist. Zur Strahlablenkung wird hierbei ein Spiegelfacettenscanner 16 verwendet, der durch einen Schrittmotor 17 gedreht wird und Bearbeitungs-, Meß- und Pilotstrahl in Abhängigkeit vom Drehwinkel in unterschiedlichen Richtungen ablenkt, wobei die Ablenkung der Strahlen durch die Verkippung der einzelnen Spiegelfacetten vorgegeben werden kann. Zur Strahlführung ist in dieser Ausführungsform ein zusätzlicher Umienkspiegel 18 vorgesehen, der die von dem Moving-Coil-System 2 kommenden Strahlen an den Spiegelfacettenscanner 16 weiterleitet.

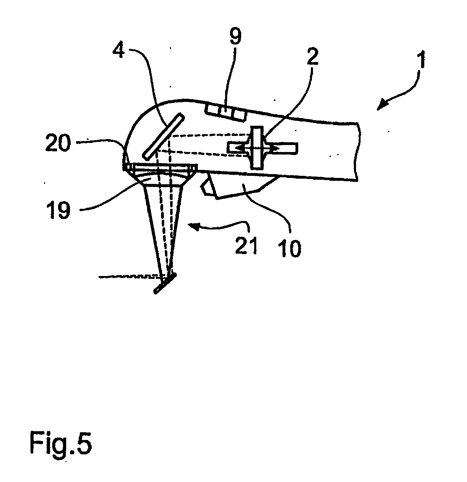

Figur 5 zeigt einen Aufsatz 21 zur 90°-Strahlumlenkung, der in die Ringnut 20 des Handhabungsteils 1 eingesetzt werden kann. Durch die 90°-Strahlumlenkung ermöglicht der Aufsatz 21 bei einer Zahnbehandlung die Bearbeitung der Wände des approximalen Kastens bei Kavitäten der Klasse II. Da durch den Aufsatz 21 der Abstand zur Fokusebene verlängert wird, ist zur Aufweitung des Strahls eine Konkavlinse 19 vorgesehen.

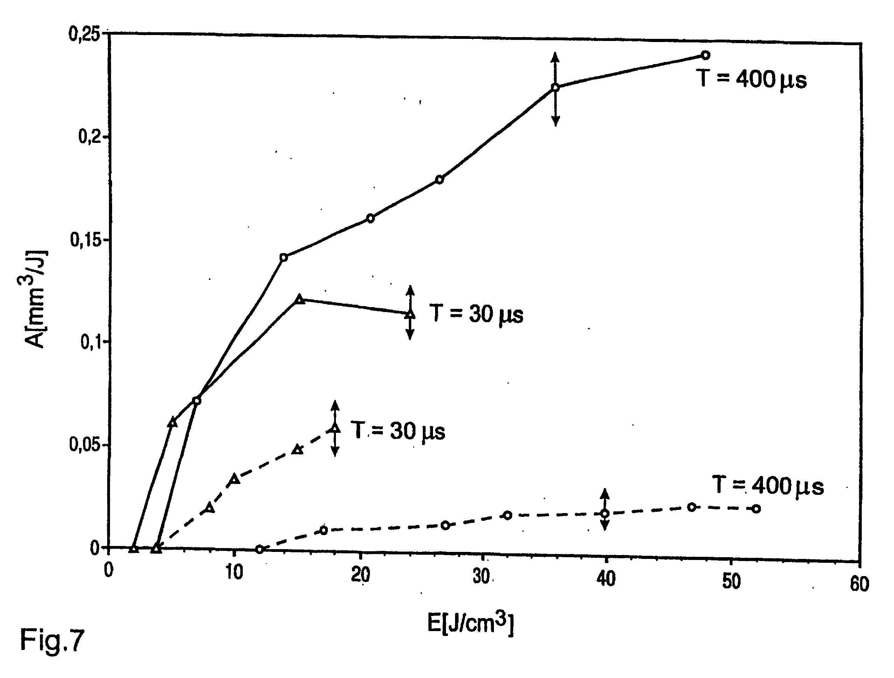

Figur 7 zeigt schließlich die Abhängigkeit der Abtragsmenge A von der Energiedichte der Laserbestrahlung für Zahnschmelz und Dentin mit der Impulsdauer als Parameter. Die durchgezogenen Linien zeigen hierbei den Verlauf der Abtragsmenge für Dentin, wohingegen die gestrichelten Linien dieselbe Abhängigkeit für Zahnschmelz zeigen. Aus dem Vergleich der beiden Kurven wird deutlich, daß die Abtragsmenge bei Dentin wesentlich größer ist als bei Zahnschmelz, was bei ungesteuerter Abtragung von Zahnhartsubstanz zu einem plötzlichen Anstieg der Abtragsmenge beim Übergang vom Zahnschmelz zum Dentin führt und eine akzidentelle Pulpaöffnung verursachen kann. Darüber hinaus geht aus dem Diagramm hervor, daß die Abtragsmenge A bei einer Verringerung der Impulsdauer T und gleichbleibender Energiedichte E keinesfalls abnimmt, sondern meist sogar zunimmt.

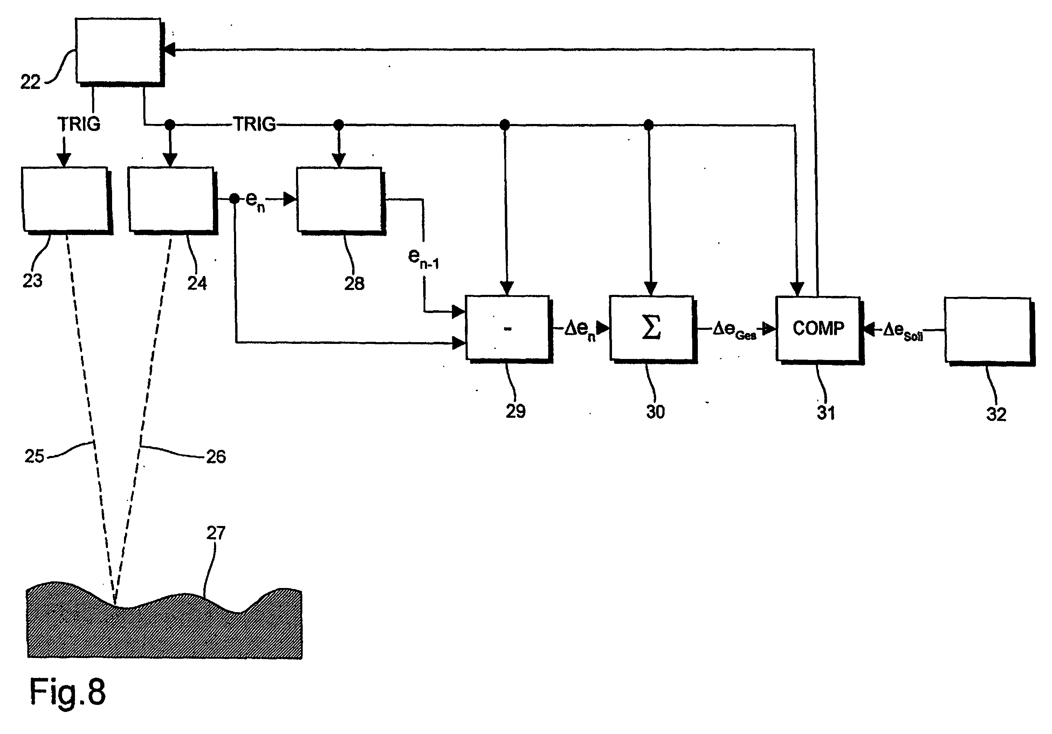

Die in Figur 8 dargestellte Schaltung dient zur Berechnung der Materialabtragstiefe aus der von dem Entfernungsmesser 24 ermittelten Entfernung zwischen dem Handhabungsteil und der Oberfläche des Werkstücks 27 im Ablationsgebiets. Die Steuerung des zum Materialabtrag dienenden Lasers 23 sowie des Lasers 24 für die Entfernungsmessung erfolgt hierbei durch die Steuereinheit 22, die in bestimmten Zeitabständen Triggerimpulse an den zum Materialabtrag dienenden Laser 23 abgibt, woraufhin der Bearbeitungsstrahl 25 pulsförmig auf die Werkstückoberfläche trifft. Nach jedem Impuls wird dann der Entfernungsmesser 24 durch einen Triggerimpuls angesteuert, der daraufhin mit dem Meßstrahl 26 die Entfernung zwischen Handhabungsteil und Werkstückoberfläche in der bereits vorstehend eingehend beschriebenen Weise mißt. Die von dem Entfernungsmesser 24 ermittelte Entfernung eₙ wird dann dem Speicherelement 28 zugeführt und vorübergehend abgespeichert. Nach Abschluß des Meßvorgangs gibt die Steuereinheit 22 dann wieder einen Triggerimpuls an den Bearbeitungslaser 23, der daraufhin wieder einen Puls zur Materialabtragung erzeugt. Anschließend wird dann wieder der Entfernungsmesser 24 angesteuert, der die aktuelle Entfernung eₙ mißt und diese ausgangsseitig sowohl an das Speicherelement 28 als auch an den Subtrahierer 29 ausgibt. Der Subtrahierer 29 berechnet dann aus der in dem Speicherelement 28 abgespeicherten und vor dem letzten Impuls gemessenen Entfernung eₙ₋₁ und der aktuellen Entfernung eₙ die durch den vorangegangenen Impuls verursachte Materialabtragstiefe. Dieser Wert Δeₙ wird dann der Recheneinheit 30 zugeführt, die die Summe Δe_{Ges} der Materialabtragstiefen Δeₙ über mehrere aufeinanderfolgende Impulse berechnet. Am Ausgang der Recheneinheit 30 erscheint also die gesamte Abtragstiefe Δe_{Ges}, die durch eine Impulsfolge bis zum letzten Impuls verursacht wurde. Dieser Wert Δe_{Ges} wird dann von der Vergleichereinheit 31 mit der gewünschten Abtragstiefe Δe_{SOLL} verglichen, die in dem Speicherelement 32 abgespeichert ist und vom Benutzer vorgegeben werden kann. Ausgangsseitig ist die Vergleichereinheit 31 mit der Steuereinheit 22 verbunden, die die Materialabtragung mit dem Laser 23 solange fortsetzt, wie die erreichte Abtragstiefe Δe_{Ges} unterhalb der gewünschten Abtragstiefe Δe_{SOLL} liegt.

## Patentansprüche

1. Vorrichtung zum Abtragen von Material von einem Werkstück, insbesondere zum Abtragen von Zahnhartsubstanz wie Zahnschmelz oder Dentin von einem Zahn oder zum Materialabtrag von keramischen Werkstoffen,
mit einem Laser zur Bestrahlung des Werkstücks in einem örtlich begrenzten Ablationsgebiet zum Abtragen von Material, und
einem den Laser aufnehmenden oder mit diesem über ein Lichtleitelement oder eine Spiegelanordnung verbundenen Handhabungsteil (1) zur Positionierung des Laserstrahls (3) im Ablationsgebiet,
wobei das Handhabungsteil (1) einen Entfernungsmesser (11 bis 15, 24, D₁, D₂) aufweist, der während der Materialabtragung oder in Bearbeitungspause mittels eines von dem zum Materialabtrag dienenden Laser oder von einem weiteren Laser erzeugten Messstrahls (11, 26) die Entfernung zwischen der Werkstückoberfläche im Ablationsgebiet und einem Bezugspunkt misst, der in einer festen Lagebeziehung relativ zu dem Handhabungsteil steht,
und wobei eine Einrichtung zur Kontrolle der Tiefe des Materialabtrags (Abtragstiefe ΔE_{ges}) vorgesehen ist, die einen mit dem Entfernungsmesser verbundenen Eingang für Entfernungsmesswerte (eₙ) aufweist,
**dadurch gekennzeichnet,**
**dass** die Einrichtung zur Kontrolle des Materialabtrages (ΔE_{ges}) einen Subtrahierer (29) zum Errechnen einer Abtragstiefe (Δeₙ) anhand mindestens eines Differenzwertes (ΔEₙ) aus einem vor einem Materialabtrag empfangenen Entfernungsmesswert (eₙ₋₁) und einem nach einem erfolgten Materialabtrag empfangenen Entfemungsmesswert (eₙ), eine Recheneinheit (30) zur Berechnung der gesamten Materialabtragstiefe (ΔE_{ges}) aus mehreren Einzelabtragstiefen (Δeₙ), und eine Vergleichereinheit (31) zum Vergleichen der Gesamtabtragstiefe (ΔE_{ges}) mit einem vorbestimmten Sollwert (ΔEₛₒᵢₗ) aufweist.

2. Vorrichtung nach Anspruch 1, **dadurch gekennzeichnet, dass** der Entfernungsmesser zur Fokussierung des Messstrahls (11) im Ablationsgebiet eine erste Sammellinse (13) aufweist,
dass zur Auskopplung des im Ablationsgebiet reflektierten Messstrahls (11) ein in dessen Strahlverlauf angeordneter erster Strahlteiler (12) und zur Bündelung des am ersten Strahlteiler (12) reflektierten Messstrahls eine zweite Sammellinse (14) vorgesehen ist,
dass zur Bestimmung der Entfernung zur Werkstückoberfläche im Ablationsgebiet zwei Lichtdetektoren (D₁, D₂) vorgesehen sind, die zur Erfassung des im Ablationsgebiet reflektierten Messstrahls (11) in dessen Strahlverlauf auf der dem ersten Strahlteiler (12) abgewandten Seite der zweiten Sammellinse (14) zueinander beabstandet angeordnet und ausgangsseitig zur Berechnung der Entfernung zu der Werkstückoberfläche im Ablationsbereich in Abhängigkeit von den Ausgangssignalen der beiden Lichtdetektoren (D₁, D₂) mit einer Recheneinheit verbunden sind.

3. Vorrichtung nach Anspruch 2, **dadurch gekennzeichnet, dass** der Messstrahl (11) und der zum Materialabtrag dienende Laserstrahl im wesentlichen koaxial verlaufen und auf der dem ersten Strahlteiler (12) abgewandten Seite der zweiten Sammellinse (14) ein zweiter Strahlteiler (15) angeordnet ist, wobei die beiden Lichtdetektoren (D₁, D₂) im Strahlengang jeweils eines der von dem zweiten Strahlteiler (15) ausgehenden Teilstrahlen angeordnet sind.

4. Vorrichtung nach Anspruch 2 oder 3, **dadurch gekennzeichnet, dass** die erste Sammellinse (13) achsparallel verschiebbar angeordnet ist und zu deren achsparallel oszillierender Verschiebung eine erste Stelleinrichtung (2) vorgesehen ist, die ausgangsseitig zur Abgabe eines die Position der ersten Sammellinse (13) wiedergebenden Signals und zur Berechnung der Entfernung zur Werkstückoberfläche aus den Ausgangssignalen der beiden Lichtdetektoren (D₁, D₂) einerseits und dem Positionssignal andererseits mit der Recheneinheit verbunden ist.

5. Vorrichtung nach einem der Ansprüche 2 bis 4, **dadurch gekennzeichnet, dass** die Recheneinheit (30) zur Abschaltung des Lasers beim Unterschreiten einer vorgegebenen Mindestentfernung und/oder beim Überschreiten einer vorgegebenen Maximalentfernung zur Werkstoffoberfläche ausgangsseitig mit einem Schwellwertglied und/oder ausgangsseitig zur Regelung des Lasers in Abhängigkeit von der gemessenen Entfernung zur Werkstückoberfläche mit einem Regler verbunden ist.

6. Vorrichtung nach einem der vorstehenden Ansprüche, **dadurch gekennzeichnet, dass** zur Verlagerung des Ablationsgebiets auf der Werkstückoberfläche eine Strahlablenkvorrichtung (4, 16) vorgesehen ist, die im Strahlengang des zum Materialabtrag dienenden Laserstrahls angeordnet und hinsichtlich der Strahlrichtung verstellbar ist und die im wesentlichen aus einem schwenkbaren Spiegel (4) oder aus einer drehbaren und/oder schwenkbaren Spiegelfacette (16) besteht, der/die im Strahlengang des für den Materialabtrag dienenden Laserstrahls angeordnet ist.

7. Vorrichtung nach Anspruch 6, **dadurch gekennzeichnet, dass** der Entfernungsmessser und eine zur Einstellung der Strahlablenkvorrichtung dienende zweite Stellvorrichtung (5, 6, 17) zur rechnergesteuerten Materialabtragung mit einem Bedienrechner verbunden sind.

8. Vorrichtung nach einem der vorstehenden Ansprüche, **dadurch gekennzeichnet, dass** der Laser zum Materialabtrag ein CTE-Laser mit einer Wellenlänge von 2,69 um oder ein Er:YSGG-Laser mit einer Wellenlänge von 2,78 µm oder ein Er:YAG-Laser mit einer Wellenlänge von 2,94 µm oder ein CO₂-Laser mit einer Wellenlänge von 9,6 µm oder 10,6 µm ist.

9. Vorrichtung nach einem der vorstehenden Ansprüche, **dadurch gekennzeichnet, dass** der Laser ein Impulslaser mit einer Impulsdauer zwischen 1 µs und 100 µs und einer Pulsrate zwischen 10 Hz und 100 kHz ist.

10. Vorrichtung nach einem der vorstehenden Ansprüche, **dadurch gekennzeichnet, dass** ein Fluidspender (10) vorgesehen ist zur Kühlung der Werkstückoberfläche im Ablationsbereich sowie in dessen Umfeld, wobei das von dem Fluidspender abgegebene Fluid im Bereich der Wellenlänge des zum Materialabtrag dienenden Laserstrahls ein Absorptionsmaximum aufweist.

11. Vorrichtung nach einem der vorstehenden Ansprüche, **dadurch gekennzeichnet, dass** zur Erzeugung des Messstrahls ein weiterer Laser vorgesehen ist, dessen Emissionswellenlänge zur Vermeidung von störenden optischen Streuungen im Ablationsgebiet im wesentlichen im Absorptionsmaximum des Werkstückmaterials liegt.

## Claims

1. An apparatus for removing material from a workpiece, in particular for removing hard tooth substance such as tooth enamel or dentine from a tooth or for removing material from ceramic substances, comprising
a laser for irradiating the workpiece in a locally delimited ablation area for the removal of material, and
a handling portion (1) which receives the laser or is connected thereto by way of an optical fibre element or a mirror arrangement, for positioning the laser beam (3) in the ablation area,
wherein the handling portion (1) has a distance measuring device (11 to 15, 24, D₁, D₂) which during the material removal operation or in a processing pause, by means of a measuring beam (11, 26) produced by the laser serving for material removal or by a further laser, measures the distance between the workpiece surface in the ablation area and a reference point which is in a fixed positional relationship relative to the handling portion,
and wherein there is provided a device for monitoring the depth of the material removal (removal depth ΔE_{ges}), having an input connected to the distance measuring device for distance measurement values (eₙ),
**characterised in that**
the device for monitoring the material removal (ΔE_{ges}) has a subtracting device (29) for calculating a removal depth (Δeₙ) by means of at least one difference value (ΔEₙ) from a distance measurement value (eₙ₋₁) received prior to a material removal operation and a distance measurement value (eₙ) received after a material removal operation has been effected, a computing unit (30) for computing the total material removal depth (ΔE_{ges}) from a plurality of individual removal depths (Δeₙ), and a comparator unit (31) for comparing the total removal depth (ΔE_{ges}) to a predetermined reference value (ΔEₛₒₗₗ).

2. An apparatus according to claim 1 **characterised in that** the distance measuring device has a first convergent lens (13) for focusing the measuring beam (11) in the ablation area,
for coupling out the measuring beam (11) reflected in the ablation area there is provided a first beam splitter (12) arranged in the beam path thereof and for focusing the measuring beam reflected at the first beam splitter (12) there is provided a second convergent lens (14), and
to determine the distance relative to the workpiece surface in the ablation area there are provided two light detectors (D₁, D₂) which to detect the measuring beam (11) reflected in the ablation area are arranged in the beam path thereof on the side of the second convergent lens (14) remote from the first beam splitter (12) in mutually spaced relationship and on the output side are connected to a computing unit to calculate the distance relative to the workpiece surface in the ablation area in dependence on the output signals from the two light detectors (D₁, D₂).

3. Apparatus according to claim 2 **characterised in that** the measuring beam (11) and the laser beam serving for material removal extend substantially coaxially and a second beam splitter (15) is arranged on the side of the second convergent lens (14) which is remote from the first beam splitter (12), wherein the two light detectors (D₁, D₂) are arranged in the beam path of a respective beam portion from the second beam splitter (15).

4. Apparatus according to claim 2 or claim 3 **characterised in that** the first convergent lens (13) is arranged displaceably in parallel relationship with the axis and provided for the oscillating displacement thereof in parallel relationship with the axis there is provided a first adjusting device (2) which on the output side is connected to the computing unit for the delivery of a signal reproducing the position of the first convergent lens (13) and for calculation of the distance relative to the workpiece surface from the output signals of the two light detectors (D₁, D₂) on the one hand and the position signal on the other hand.

5. Apparatus according to one of claims 2 to 4 **characterised in that** for switching off the laser when the distance falls below a predetermined minimum distance and/or when the distance exceeds a predetermined maximum distance relative to the workpiece surface, the computing unit (30) is connected on the output side to a threshold member and/or it is connected on the output side to a regulator for regulating the laser in dependence on the measured distance relative to the workpiece surface.

6. Apparatus according to one of the preceding claims **characterised in that** for displacement of the ablation area on the workpiece surface there is provided a beam deflection device (4, 16) which is arranged in the beam path of the laser beam serving for material removal and which is adjustable in respect of the beam direction and which substantially comprises a pivotable mirror (4) or a rotatable and/or pivotable mirror facet (16) which is arranged in the beam path of the laser beam serving for material removal.

7. Apparatus according to claim 6 **characterised in that** the distance measuring device and a second adjusting device (5, 6, 17) serving to adjust the beam deflection device are connected to an operating computer for computer-controlled material removal.

8. Apparatus according to one of the preceding claims **characterised in that** the laser for material removal is a CTE-laser with a wavelength of 2.69 µm or an Er:YSGG laser with a wavelength of 2.78 µm or an Er:YAG-laser with a wavelength of 2.94 µm or a CO₂-laser with a wavelength of 9.6 µm or 10.6 µm.

9. Apparatus according to one of the preceding claims **characterised in that** the laser is a pulsed laser with a pulse duration of between 1 µs and 100 µs and a pulse rate of between 10 Hz and 100 kHz.

10. Apparatus according to one of the preceding claims **characterised in that** there is provided a fluid dispenser (10) for cooling the workpiece surface in the ablation region and in the area therearound, wherein the fluid discharged by the fluid dispenser has an absorption maximum in the region of the wavelength of the laser beam serving for material removal.

11. Apparatus according to one of the preceding claims **characterised in that** to produce the measuring beam there is provided a further laser whose emission wavelength is substantially in the absorption maximum of the workpiece material for avoiding interfering optical scatter effects in the ablation area.

## Revendications

1. Dispositif d'enlèvement de matière d'une pièce d'ouvrage, en particulier en vue de l'enlèvement de substance dure dentaire comme l'émail ou la dentine d'une dent ou en vue de l'enlèvement de matière de matériaux céramiques, équipé d'un laser en vue de l'irradiation de la pièce d'ouvrage dans une région d'ablation limitée localement en vue de l'enlèvement de matière, et
d'un instrument tenu à la main (1) recevant le laser ou relié à celui-ci par l'intermédiaire d'un guide de lumière ou d'un dispositif de miroir en vue du positionnement du rayon laser (3) dans la région d'ablation,
l'instrument tenu à la main (1) présentant un appareil de mesure de distance (11 à 15, 24, D₁, D₂), qui durant l'enlèvement de matière ou durant une pause du traitement, mesure à l'aide d'un laser servant à l'enlèvement de matière ou d'un rayon de mesure (11, 26) généré par un autre laser, la distance entre la surface de la pièce d'ouvrage dans la région d'ablation et un point de référence, qui se tient en relation de position fixe par rapport à l'instrument tenu à la main, et
un instrument en vue du contrôle de la profondeur de l'enlèvement de matière (profondeur d'enlèvement ΔE_{ges}) étant prévu, qui présente une entrée pour des valeurs de mesure de distance (eₙ) reliée à l'appareil de mesure de distance,
**caractérisé en ce que**
le dispositif de contrôle de l'enlèvement de matière (ΔE_{ges}) présente un soustracteur (29) en vue du calcul d'une profondeur d'enlèvement (Δeₙ) à l'aide d'au moins une valeur de différence (ΔEₙ) à partir d'une valeur de mesure de distance (eₙ₋₁) reçue avant un enlèvement de matière et d'une valeur de mesure de distance (eₙ) reçue après exécution d'un enlèvement de matière, une unité de calcul (30) en vue du calcul de la profondeur à partir de plusieurs profondeur d'enlèvement distinctes (ΔEₙ), et une unité de comparaison (31) en vue de la comparaison de la profondeur d'enlèvement globale (ΔE_{ges}) à une valeur de consigne prédéterminée (ΔE_{consigne}).

2. Dispositif selon la revendication 1, **caractérisé en ce que** l'appareil de mesure de distance présente en vue de la concentration du rayon de mesure (11) dans la région d'ablation une première lentille convergente (13),
**en ce qu'**en vue du découplage du rayon de mesure (11) réfléchi dans la région d'ablation est prévu un premier diviseur de rayon (12) disposé dans le trajet de rayon de celui-ci et en vue de la concentration du rayon de mesure réfléchi sur le premier diviseur de rayon (12) est prévue une seconde lentille convergente (14),
**en ce qu'**en vue de la détermination de la distance à la surface de la pièce d'ouvrage dans la région d'ablation sont prévus deux détecteurs de lumière (D₁, D₂), qui sont disposés éloignés l'un de l'autre en vue de la détection du rayon de mesure (11) réfléchi dans la région d'ablation dans le trajet de rayon de celui sur le côté éloigné du premier diviseur de rayon (12) de la seconde lentille convergente (14) et sont réunis côté sortie à une unité de calcul en vue du calcul de la distance à la surface de la pièce d'ouvrage dans la région d'ablation en fonction des signaux de sortie des deux détecteurs de lumière (D₁, D₂).

3. Dispositif selon la revendication 2, **caractérisé en ce que** le rayon de mesure (11) et le rayon laser servant à l'enlèvement de matière s'étendent sensiblement coaxialement et sur le côté éloigné du premier diviseur de rayon (12) de la seconde lentille convergente (14) est disposé un second diviseur de rayon (15), les deux détecteurs de lumière (D₁, D₂) étant disposés dans le trajet de rayon respectivement d'un des rayons partiels émergeant du second diviseur de rayon (15).

4. Dispositif selon la revendication 2 ou 3, **caractérisé en ce que** la première lentille convergente (13) est disposée déplaçable parallèlement à l'axe et en vue du déplacement oscillant parallèle à l'axe de celle-ci est prévu un premier dispositif de réglage (2), qui est relié côté sortie en vue de la délivrance d'un signal restituant la position de la première lentille convergente (13) et en vue du calcul de la distance à la surface de la pièce d'ouvrage à partir des signaux de sortie des deux détecteurs de lumière (D₁, D₂) d'une part et du signal de position d'autre part.

5. Dispositif selon une des revendications 2 à 4, **caractérisé en ce que** l'unité de calcul (30) est reliée côté sortie en vue de la coupure du laser lors du passage au-dessous d'une distance minimale prescrite et/ou lors du dépassement d'une distance maximale prescrite à la surface de la pièce d'ouvrage et/ou côté sortie avec un régulateur en vue de la régulation du laser en fonction de la distance mesurée à la surface de la pièce d'ouvrage.

6. Dispositif selon l'une des revendications précédentes, **caractérisé en ce qu'**en vue du déplacement de la région d'ablation sur la surface de la pièce d'ouvrage est prévu un dispositif de déviation de rayon (4, 16), qui est disposé dans le trajet de rayon du rayon laser servant à l'enlèvement de matière et est déplaçable par rapport à la direction du rayon et qui se compose sensiblement d'un miroir pivotant (4) ou d'une facette de miroir (16) rotative et/ou pivotante, qui est disposé(e) dans le trajet de rayon du rayon laser servant à l'enlèvement de matière.

7. Dispositif selon la revendication 6, **caractérisé en ce que** l'appareil de mesure de distance et un second dispositif de réglage (5, 6, 17) servant au réglage du dispositif de déviation de rayon sont reliés à un calculateur de commande en vue de l'enlèvement de matière commandé par calculateur.

8. Dispositif selon l'une des revendications précédentes, **caractérisé en ce que** le laser d'enlèvement de matière est un laser CTE de longueur d'onde de 2,69 µm ou un laser Er:YSGG de longueur d'onde de 2,78 µm ou un laser Er:YAG de longueur d'onde de 2,94 µm ou un laser CO₂ de longueur d'onde de 9,6 µm ou 10,6 µm.

9. Dispositif selon l'une des revendications précédentes, **caractérisé en ce que** le laser est un laser pulsé avec une durée d'impulsion entre 1 µs et 100 µs et une fréquence d'impulsions entre 10 Hz et 100 kHz.

10. Dispositif selon l'une des revendications précédentes, **caractérisé en ce qu'**un distributeur de fluide (10) est prévu en vue du refroidissement de la surface de la pièce d'ouvrage dans la région d'ablation ainsi que dans l'environnement de celle-ci, le fluide délivré par le distributeur de fluide présentant à proximité de la longueur d'onde du rayon laser servant à l'enlèvement de matière une absorption maximale.

11. Dispositif selon l'une des revendications précédentes, **caractérisé en ce qu'**en vue de la génération du rayon de mesure un autre laser est prévu, dont la longueur d'onde d'émission en vue de la suppression de dispersions optiques perturbatrices dans la région d'ablation se trouve sensiblement au maximum d'absorption du matériau de la pièce d'ouvrage.
